# EUROPÄISCHE PATENTANMELDUNG

(11) **EP 1 025 967 A1**
(43) Veröffentlichungstag der Anmeldung: **09.08.2000**
(21) Anmeldenummer: 00100776.4
(22) Anmeldetag: 15.01.2000
(51) Int. Cl.: B27K 3/52

(54) **Holzschutzmittel**

(30) Priorität: 25.01.1999 EP 99101277
(71) Anmelder: Lonza AG, 4052 Basel (CH)
(72) Erfinder: Fritschi, Joachim, 79541 Lörrach (DE); Lichtenberg, Florian, 79639 Grenzach-Wyhlen (DE)

(57) **Zusammenfassung**

Beschrieben werden Holzschutzmittel auf Basis von Borsäure, wenigstens eines primären und/oder sekundären und/oder tertiären C₂₋₄-Alkanolamins, wenigstens einer quartären Ammoniumverbindung, wenigstens eines Netzmittels und/oder Emulgators und Wasser, die zusätzlich 0,01-1,5 Gew.-% wenigstens eines Fungizids enthalten. Die erfindungsgemässen Mittel zeichnen sich dadurch aus, dass das damit behandelte Holz auch in feuchtem Zustand nicht zum Verschimmeln neigt und auch bei vorübergehender Lagerung im Freien nur ein geringer Teil der Wirkstoffkombination durch den Regen ausgewaschen wird.

## Beschreibung

Die Erfindung betrifft Holzschutzmittel auf der Basis von Borsäure und quartären Ammoniumverbindungen sowie ein Verfahren zum Schutz von Holz unter Verwendung der erfindungsgemässen Mittel.

Es ist bekannt, dass Borsäure, ihre Salze und komplexe Borate zum Schutz von Holz und Holzprodukten gegen holzzerstörende Pilze und Insekten eingesetzt werden können. Weiterhin ist es Stand der Technik, borhaltige Holzschutzmittel in flüssiger Form als wassergelöste Konzentrate zur besseren Handhabbarkeit zuzubereiten. Der Nachteil der Borsäure und ihrer Salze, ihre geringe Wasserlöslichkeit, wird oft durch Zugabe von Aminen beseitigt, so dass hoch borhaltige Konzentrate möglich sind (DE-B-21 40 051, DE-A-30 30 242). Nachteilig ist jedoch, dass Borverbindungen im Holz nicht fixierbar sind und deshalb bei vorübergehendem Lagern des imprägnierten Holzes im Freien leicht ausgewaschen werden, und dass mit aminhaltigen Formulierungen imprägniertes Holz in der Praxis während der Trocknungszeit sehr stark zum Verschimmeln neigt.

Gleichfalls ist es Stand der Technik, quartäre Ammoniumverbindungen zum Schutz von Holz und Holzprodukten gegen holzzerstörende und holzverfärbende Pilze und Insekten einzusetzen. Ein Nachteil der quartären Ammoniumverbindungen ist, dass sie in der Regel nur oberflächlich im Holz fixiert werden und ihre vorbeugende Wirkung gegenüber dem Befall durch holzzerstörende Insekten nicht sehr gut ausgeprägt ist. Auch dabei besteht die Gefahr, dass aus dem imprägnierten Holz beim Lagern im Freien die quartäre Ammoniumverbindung aus der Oberfläche ausgewaschen werden kann.
Auch bei den quartären Ammoniumverbindungen ist mit Schimmelbildung auf damit imprägniertem Holz zu rechnen, die beispielsweise durch Formulierungen mit Zusatz von Carbendazim (JP-A-04/356404) oder TCMTB (ZA 8707639 ) unterbunden werden kann. In EP-A-0 533 016 wird wegen der bei einzelnen Fungiziden vorhandenen Wirkungslücken die Kombination von Tebuconazol, Carbendazim und Benzalkoniumchlorid vorgeschlagen, in EP-A 0 490 563 diejenige von speziellen Triazolen, zum Beispiel α-[2-(4-Chlorphenyl)-ethyl]-α-(4-chlorphenyl)-1*H*-1,2,4-triazol-1-propannitril, und quartären Ammoniumverbindungen. In EP-A-0 328 466 wird die gleichzeitige Verwendung von Triazolen, Benzimidazolen und quartären Ammoniumverbindungen und in ZA 8707639 eine synergistische Mischung aus quartärer Ammoniumverbindung und TCMTB beschrieben.

Es wurde auch schon vorgeschlagen, die Wirkung der Borverbindungen und der quartären Ammoniumverbindungen zu kombinieren und so ihre Nachteile zu verringern und eine Schimmelbildung bei frisch imprägniertem Holz zu unterbinden, ohne dass dies in der Praxis bestätigt werden konnte.
So werden zum Beispiel in DE-A-36 13 254 eine Kombination von Borsäure, Alkyl-dimethylaminen und (als Emulgator) quartären Ammoniumverbindungen, in EP-A-0 242 751 eine Kombination aus Borsäure, Polyamin und einer quartären Ammoniumverbindung, in RU 2 048 288 eine Kombination aus Borverbindung, Soda, Alkylbenzyldimethylammoniumchlorid, Natriumpolyaminomethylenphosphonat und Trinatriumphosphat und in CN 1 060 487 die Kombination aus Ammoniumpolyphosphat, Borverbindungen und quartärer Ammoniumverbindung beschrieben.

Aufgabe der vorliegenden Erfindung war es, ein Holzkonservierungsmittel bereitzustellen, das gegenüber holzverfärbenden und holzzerstörenden Pilzen sowie gegenüber holzschädigenden Insekten, insbesondere gegenüber holzzerstörenden Bockkäfern (*Cerambycidae, Lyctidae, Bostrychidae* und *Anobiidae*) vorbeugend wirksam ist, bei kurzzeitiger Belastung durch Regen einen nur geringen Verlust an Wirkstoffen im Vergleich zur eingebrachten Gesamtmenge aufweist und bei dem die durch den Gehalt an Alkanolaminen bedingte Schimmel- und Bläueanfälligkeit des imprägnierten Holzes während der Trocknungsphase unterbunden wird.

Erfindungsgemäss wird diese Aufgabe durch das Holzschutzmittel nach Patentanspruch 1 gelöst.

Es wurde überraschend gefunden, dass die an sich bekannte Kombination von Borsäure mit einer geringen Menge eines Alkanolamins und einer quartären Ammoniumverbindung bereits durch den Zusatz einer geringen Menge einer oder mehrerer Triazolverbindungen oder weiterer Fungizide die gewünschten Eigenschaften erhält.

Es ist dabei überraschenderweise zu beobachten, dass bereits ein sehr geringer Zusatz weiterer Fungizide nicht nur den Schimmelbefall weitestgehend unterdrückt, sondern auch in Sinne eines synergistischen Effektes zu einer zum Teil erheblichen Erniedrigung der Grenzwerte gegenüber Basidiomyceten führt.

Die erfindungsgemässen Mittel enthalten Borsäure, wenigstens ein primäres und/oder sekundäres und/oder tertiäres C₂₋₄-Alkanolamin, wenigstens eine quartäre Ammoniumverbindung, wenigstens ein Netzmittel und/oder einen Emulgator, Wasser als Lösungsmittel, sowie 0,01-1,5 Gew.-% wenigstens eines (weiteren) Fungizids.

Vorzugsweise enthalten die erfindungsgemässen Mittel:
(Alle Prozentangaben in Gewichtsprozenten)
2-10% quartäre Ammoniumverbindungen
10-30% Borsäure
3-10% Alkanolamine
3-10% eines kationischen und/oder nichtionischen Netzmittels bzw. Emulgators oder eines Gemisches mehrerer Emulgatoren
0,01-1,5% eines oder mehrerer Fungizide sowie gegebenenfalls 0,05-1,5% eines oder mehrerer Insektizide.

Als Fungizid enthalten die erfindungsgemässen Mittel vorzugsweise wenigstens eine Verbindung aus der Gruppe bestehend aus 2-Mercaptobenzthiazol, 2-Methyl-4,5-trimethylen-4-isothiazolin-3-on, 2-*n*-Octylisothiazolinon, 2-Phenylphenol und dessen Natriumsalz, 2,3,5,6-Tetrachlor-4-methylsulfonyl-pyridin, 4,4'-(2-Ethyl-2-nitro-propan-1,3-diyl)-bismorpholin, Azaconazol, Benzisothiazolinon, Benzthiophen-2-cyclohexyl-carboxamid-*S,S*-dioxid, Bethoxazin, Bitertanol, Bromuconazol, Carbendazim, Climbazol, Cyproconazol, Difenoconazol, Dodemorph, Fenbuconazol, Fenpropimorph, Fludioxonil, Fluquinconazol, Flusilazol, Flutolanil, Furmecyclox, Hexaconazol, Iodo-2-propinyl-*n*-butyl-carbamat, Myclobutanil, *N*-Hydroxymethyl-benzthiazol-2-thion, *N*-(2-Nitrobutyl)-morpholin, Oxadixyl, Prochloraz, Propiconazol, Pyrifenox, Tebuconazol, Tetraconazol, Thiabendazol, Triadimenol, Tridemorph und Triticonazol.

Die erfindungsgemässen Mittel enthalten ausserdem vorzugsweise noch 0,01-1,5 Gew.-% wenigstens eines Insektizids.
Als Insektizide sind diejenigen aus der Gruppe bestehend aus 2-(3-Bromdifluormethoxyphenyl)-2-methylpropyl-3-phenoxybenzylether (MIT-732), 2-(4-Ethoxyphenyl)-2-trifluormethyl-ethyl-4-chlorphenoxybenzylether (ICI-A5682), Acetamiprid, Chlorflurazuron, Cyfluthrin, Cypermethrin, Diflubenzuron, Ethofenprox (2-(4-Ethoxyphenyl)-2-methylpropyl-3-phenoxybenzylether), Fenoxycarb, Fipronil, Flufenoxuron, Hexaflumuron, Imidacloprid, Lindan, Lufenuron, *N*-Ethyl-*N*-(2-chlorpyrid-5-ylmethyl)-*N'*-methyl-2-nitroethylen-1,1-diamin (TI304), natürlichen und synthetischen Pyrethroiden, Permethrin, Pyriproxyfen, Silafluofen, Tebufenocide, Teflubenzuron und Triflumuron besonders bevorzugt.

Als quartäre Ammoniumverbindung enthalten die erfindungsgemässen Mittel vorzugsweise Didecyl-dimethyl-ammonium und/oder Didecyl-methyl-polyoxyethyl-ammonium in Form des Chlorides, Propionates und/oder Lactates.

Die erfindungsgemässen Mittel enthalten vorzugsweise wenigstens einen kationischen und/oder nichtionischen Emulgator aus der Gruppe der Sorbitanlauratethoxylate, C₁₂₋₁₅-Oxoalkoholpolyethoxylate, Nonylphenolethoxylate, Alkylpolyglucoside, Fettalkoholpolyethylenglycolether, Fettsäurepolyethylenglycolester, Polyethylenglycolmonophenylether, *N*-Fettalkyl-1,3-diaminopropanethoxylate oder Fettalkylaminethoxylate.

Die erfindungsgemässen Mittel werden vorteilhaft in Form einer wässrigen Lösung mit vorzugsweise 5-20 Gew.-% zur Behandlung von Holz als Schutz gegen Pilze und Insekten eingesetzt.

Die folgenden Beispiele verdeutlichen die Zusammensetzung und Eigenschaften der erfindungsgemässen Mittel, ohne dass darin eine Einschränkung zu sehen ist.

### Vergleichsbeispiel 1

55,0% Borsäure
17,0% Ethanolamin
Wasser ad 100%
Grenzwerte nach Auswaschbeanspruchung gegen *Coniophora*: 28-36 kg/m³

### Vergleichsbeispiel 2

21,0% Borsäure
6,2% Ethanolamin
5,5% Benzalkoniumchlorid
Wasser ad 100%
Grenzwerte nach Auswaschbeanspruchung gegen *Coniophora*: 10-14 kg/m³

### Vergleichsbeispiel 3

21,0% Borsäure
6,2% Ethanolamin
5,5% Benzalkon A
5,5% Sorbitanmonolauratethoxylat
Wasser ad 100%
Grenzwerte nach Auswaschbeanspruchung gegen *Coniophora*: 12-17 kg/m³

### Beispiel 1

8,10% Ethanolamin
27,50% Borsäure
5,50% Nonylphenolethoxylat (30 EO)
5,00% Didecyldimethylammoniumchlorid
0,50% 1-[2-(2,4-Dichlorphenyl)-4-propyl-1,3-dioxolan-2-ylmethyl]-1*H*-1,2,4-triazol (Propiconazol), 50%ig in Dipropylenglycolmonomethylether
Wasser ad 100%
Grenzwerte nach Auswaschbeanspruchung gegen *Coniophora*: 4-6 kg/m³

### Beispiel 2

8,10% Ethanolamin
27,50% Borsäure
5,50% Tetraethylenglycolmonophenylether/Sorbitanmonolauratethoxylat (1:1)
5,00% Didecyl-methyl-polyoxyethyl-ammoniumchlorid
2,00% Ethylenglycol
0,15% 2,3,5,6-Tetrachlor-4-methylsulfonylpyridin
Wasser ad 100%
Grenzwerte nach Auswaschbeanspruchung gegen *Coniophora*: 8-11 kg/m³

### Beispiel 3

8,10% Ethanolamin
27,50% Borsäure
5,50% C₁₂₋₁₅-Fettalkoholpolyethylenglycolether
5,00% Didecyl-methyl-polyoxyethyl-ammoniumchlorid
2,00% Ethylenglycol
0,25% 1-[2-(2,4-Dichlorphenyl)-4-propyl-1,3-dioxolan-2-ylmethyl]-1*H*-1,2,4-triazol (Propiconazol)
0,05% Fenoxycarb
Wasser ad 100%
Grenzwerte nach Auswaschbeanspruchung gegen *Coniophora*: 4-6 kg/m³

### Beispiel 4

8,10% Ethanolamin
27,50% Borsäure
5,50% Sorbitanmonolauratethoxylat
5,00% Didecyl-methyl-polyoxyethyl-ammoniumchlorid
2,00% Ethylenglycol
0,25% 1-[2-(2,4-Dichlorphenyl)-4-propyl-1,3-dioxolan-2-ylmethyl]-1*H*-1,2,4-triazol (Propiconazol)
0,20% Silafluofen
Wasser ad 100%
Grenzwerte nach Auswaschbeanspruchung gegen *Coniophora*: 4-6 kg/m³

### Beispiel 5

7,50% Ethanolamin
24,70% Borsäure
5,00% Nonylphenolethoxylat
4,50% Didecyl-dimethylammoniumchlorid
0,45% *N*-Propyl-*N*-[2-(2,4,6-trichlorphenoxy)-ethyl]-1*H*-imidazol-1-carboxamid (Prochloraz)
Wasser ad 100%
Grenzwerte nach Auswaschbeanspruchung gegen *Coniophora*: 7-10 kg/m³

### Beispiel 6

8,10% Ethanolamin
27,50% Borsäure
5,50% Sorbitanmonolauratethoxylat
5,00% Didecyldimethylammoniumchlorid
0,45% 1-[2-(2,4-Dichlorphenyl)-1,3-dioxolan-2-ylmethyl]-1*H*-1,2,4-triazol (Azaconazol)
1,05% *N*-Methylpyrrolidon
0,03% Ethyl-[2-(4-phenoxyphenoxy)ethyl]carbamat
Wasser ad 100%
Grenzwerte nach Auswaschbeanspruchung gegen *Coniophora*: 5-7 kg/m³

Bei vergleichbaren Aufnahmemengen der unterschiedlichen Beispielformulierungen von jeweils 30 g/m² Holzoberfläche wurden nach 5-stündigem Trocknen an der Luft, Auflegen der Prüfkörper auf Malzagar, Übergiessen von Prüfkörper und Nährboden mit einer Sporensuspension, Abgiessen der überschüssigen Suspension nach 5 min und Aufbewahren der geschlossenen Petrischale bei 20 °C die Zeitdauer bis zum vollständigen Bewachsen des Prüfkörpers mit Schimmel beobachtet. Die Ergebnisse sind in der folgenden Tabelle 1 zusammengefasst.

**Tabelle 1**

| Beispiel | Borsäure [g/m²] | Quat [g/m²] | Fungizid [g/m²] | Bewachsen nach [d] |
|---|---|---|---|---|
| V1 | 16,5 | 0 | 0 | 3-4 |
| V2 | 6,3 | 1,65 | 0 | 4-6 |
| V3 | 6,3 | 1,65 | 0 | 3-4 |
| 1 | 8,25 | 1,5 | 0,075 | >21 |
| 2 | 8,25 | 1,5 | 0,045 | >21 |
| 3 | 8,25 | 1,5 | 0,075 | >21 |
| 5 | 7,35 | 1,35 | 0,135 | >21 |
| 6 | 8,25 | 1,5 | 0,135 | >21 |

Die Grenzwerte für die Vergleichsbeispiele 1-3 und die Beispiele 1-6 wurden in Anlehnung an DIN EN 113 nach künstlicher Alterung nach DIN EN 84 an *Coniophora puteana* bestimmt, da bekannt ist, dass dieser Prüfpilz gegenüber quartären Ammoniumverbindungen besonders resistent ist. Die Grenzwerte sind so zu verstehen, dass der erste, niedrigere Wert die Einbringmenge (in kg/m³ Holz) angibt, bei der noch keine Schutzwirkung der Formulierung zu verzeichnen ist, und der zweite, höhere Wert diejenige Einbringmenge angibt, bei der die Formulierung die von der Norm geforderte Schutzwirkung gegenüber der holzzerstörenden Wirkung des Prüfpilzes aufweist. Die Ergebnisse sind in der folgenden Tabelle 2 zusammengefasst.

**Tabelle 2**

| Beispiel Nr. | Grenzwerte [kg/m³] | Beispiel Nr. | Grenzwerte [kg/m³] |
|---|---|---|---|
| V1 | 28-36 | 3 | 4-6 |
| V2 | 10-14 | 4 | 4-6 |
| V3 | 12-17 | 5 | 7-10 |
| 1 | 4-6 | 6 | 5-7 |
| 2 | 8-11 | | |

## Patentansprüche

1. Holzschutzmittel auf der Basis von Borsäure, wenigstens eines primären und/oder sekundären und/oder tertiären C₂₋₄-Alkanolamins, wenigstens einer quartären Ammoniumverbindung, wenigstens eines Netzmittels und/oder Emulgators und Wasser, dadurch gekennzeichnet, dass es 0,01-1,5 Gew.-% wenigstens eines Fungizids enthält.

2. Holzschutzmittel nach Anspruch 1, dadurch gekennzeichnet, dass es
10-30 Gew.-% Borsäure,
3-10 Gew.-% Alkanolamin(e),
2-10 Gew.-% quartäre Ammoniumverbindung(en)
und 3-10 Gew.-% eines kationischen und/oder nichtionischen Netzmittels und/oder Emulgators oder eines Gemisches mehrerer Emulgatoren enthält.

3. Holzschutzmittel nach Anspruch 1 oder 2, dadurch gekennzeichnet, dass es wenigstens ein Fungizid aus der Gruppe bestehend aus 2-Mercaptobenzthiazol, 2-Methyl-4,5-trimethylen-4-isothiazolin-3-on, 2-*n*-Octylisothiazolinon, 2-Phenylphenol und dessen Natriumsalz, 2,3,5,6-Tetrachlor-4-methylsulfonyl-pyridin, 4,4'-(2-Ethyl-2-nitro-propan-1,3-diyl)-bismorpholin, Azaconazol, Benzisothiazolinon, Benzthiophen-2-cyclohexylcarboxamid-*S,S*-dioxid, Bethoxazin, Bitertanol, Bromuconazol, Carbendazim, Climbazol, Cyproconazol, Difenoconazol, Dodemorph, Fenbuconazol, Fenpropimorph, Fludioxonil, Fluquineonazol, Flusilazol, Flutolanil, Furmecyclox, Hexaconazol, Iodo-2-propinyl-*n*-butyl-carbamat, Myclobutanil, *N*-Hydroxymethylbenzthiazol-2-thion, *N*-4-(2-Nitrobutyl)-morpholin, Oxadixyl, Prochloraz, Propiconazol, Pyrifenox, Tebuconazol, Tetraconazol, Thiabendazol, Triadimenol, Tridemorph und Triticonazol enthält.

4. Holzschutzmittel nach einem der Ansprüche 1 bis 3, dadurch gekennzeichnet, dass es zusätzlich 0,01-1,5 Gew.-% wenigstens eines Insektizids enthält.

5. Holzschutzmittel nach Anspruch 4, dadurch gekennzeichnet, dass es wenigstens ein Insektizid aus der Gruppe bestehend aus 2-(3-Bromdifluormethoxyphenyl)-2-methylpropyl-3-phenoxybenzylether (MIT-732), 2-(4-Ethoxyphenyl)-2-trifluormethyl-ethyl-4-chlorphenoxybenzylether (ICI-A5682), Acetamiprid, Chlorflurazuron, Cyfluthrin, Cypermethrin, Diflubenzuron, Ethofenprox (2-(4-Ethoxyphenyl)-2-methylpropyl-3-phenoxybenzylether), Fenoxycarb, Fipronil, Flufenoxuron, Hexaflumuron, Imidacloprid, Lindan, Lufenuron, *N*-Ethyl-*N*-(2-chlorpyrid-5-ylmethyl)-*N'*-methyl-2-nitroethylen-1,1-diamin (TI304), natürlichen und synthetischen Pyrethroiden, Permethrin, Pyriproxyfen, Silafluofen, Tebufenocide, Teflubenzuron und Triflumuron enthält.

6. Holzschutzmittel nach einem der Ansprüche 1 bis 5, dadurch gekennzeichnet, dass es Didecyl-dimethyl-ammonium und/oder Didecyl-methyl-polyoxyethyl-ammonium in Form des Chlorides, Propionates und/oder Lactates enthält.

7. Holzschutzmittel nach einem der Ansprüche 1 bis 6, dadurch gekennzeichnet, dass es wenigstens einen kationischen und/oder nichtionischen Emulgator aus der Gruppe der Sorbitanlauratethoxylate, C₁₂₋₁₅-Oxoalkoholpolyethoxylate, Nonylphenolethoxylate, Alkylpolyglucoside, Fettalkoholpolyethylenglycolether, Fettsäurepolyethylenglycolester, Polyethylenglycolmonophenylether, *N*-Fettalkyl-1,3-diaminopropanethoxylate oder Fettalkylaminethoxylate enthält.

8. Verfahren zum Schutz von Holz gegen Pilze und Insekten, dadurch gekennzeichnet, dass das Holz mit einer wässrigen Lösung, vorzugsweise 5-20 Gew.-%, eines Holzschutzmittels gemäss den Ansprüchen 1 bis 7 behandelt wird.
